# EUROPÄISCHE PATENTSCHRIFT

(11) **EP 4 555 268 B1**
(45) Veröffentlichungstag und Bekanntmachung des Hinweises auf die Patenterteilung: **20.05.2026**
(21) Anmeldenummer: 23741649.0
(22) Anmeldetag: 11.07.2023
(51) Int. Cl.: F28D 20/00, F24H 9/20, F24H 7/04, F24H 3/02, F28F 27/00, G01K 1/14, G01K 7/02, H05B 1/02, H05B 3/82

(54) **SYSTEM UND VERWENDUNG EINES THERMOELEMENTS ZUR ÜBERWACHUNG DER TEMPERATUR EINES HEIZELEMENTS**
SYSTEM AND USE OF A THERMOCOUPLE FOR MONITORING THE TEMPERATURE OF A HEATING ELEMENT
SYSTÈME ET UTILISATION D'UN THERMOCOUPLE POUR SURVEILLER LA TEMPÉRATURE D'UN ÉLÉMENT CHAUFFANT

(30) Priorität: 15.07.2022 DE 102022117782
(43) Veröffentlichungstag der Anmeldung: 21.05.2025
(73) Patentinhaber: Otto Junker GmbH, 52152 Simmerath/Lammersdorf (DE)
(72) Erfinder: SCHMITZ, Wilfried, 52249 Eschweiler (DE); UERLICHS, Peter, 52152 Simmerath (DE); MERTENS, Tobias, 52393 Hürtgenwald (DE)
(74) Vertreter: Cohausz & Florack
(86) Internationale Anmeldenummer: PCT/EP2023/069175
(87) Internationale Veröffentlichungsnummer: WO 2024/013163

(56) Entgegenhaltungen:
- WO-A1-2015/085357
- CN-A- 114 076 535
- DE-A1- 102021 100 441

## Beschreibung

Die Erfindung betrifft ein System, mit einem Heizelement und mit einem Thermoelement, wobei das Heizelement zum Erwärmen eines am Heizelement durchströmenden Fluids ausgebildet ist. Die Erfindung betrifft ebenfalls eine Verwendung eines Thermoelements zur Überwachung der Temperatur eines Heizelements.

Als Heizelement wird ein technisches Bauteil, mit dem einem Stoff Wärmeenergie zugeführt werden kann, verstanden. Häufig werden Heizelemente derart ausgebildet, dass sie eine möglichst große Fläche zum Kontakt mit dem zu erwärmenden Stoff aufweisen. Hierzu können zum Beispiel Materialen, die eine hohe Porosität aufweisen, und/oder eine Formgebung mit einer Vielzahl an Windungen verwendet werden.

Als Thermoelement wird im Allgemeinen ein Paar elektrischer Leiter aus unterschiedlichen Metallen verstanden, die an einem Ende miteinander verbunden sind und aufgrund des thermoelektrischen Effektes zur Temperaturmessung geeignet sind.

In dem immer relevanten Kontext des Klimawandels werden Forschungsarbeiten in Zusammenhang mit Speicherung und Rückgewinnung von elektrischer Energie betrieben. So wird aktuell anhand eines mit Keramik ummantelten und mit Luft durchströmten Durchgangskanals erprobt, wie effizient die dadurch erreichbare Energierückgewinnung gestaltet werden kann. Vom Prinzip her wird Luft mithilfe einer Umwälzungseinrichtung durch den Durchgangskanal beschleunigt und durch in dem Durchgangskanal angeordnete, elektrisch gespeiste Heizelemente geheizt. Die warme Luft überträgt ihre Wärme wiederum an ein Speichermaterial einer im Anschluss zum Durchgangskanal angeordneten Wärmespeichervorric dort für mehrere Tage gelagert werden und später Energiequelle für eine Rückgewinnung sein.

Bei einem derartigen Vorgang werden die im Durchgangskanal angeordneten Heizelemente einem starken Luftstrom ausgesetzt, den sie erwärmen sollen, und bei relativ hohen Temperaturen betrieben. Die Luftströmung schließt in der Regel den Einsatz von sogenannten porösen Heizelementen aus und es werden bevorzugt Heizelemente eingesetzt, die zum Beispiel eine Nickel-Chrom-Legierung aufweisen. Derartige Heizelement werden für die oben angesprochene Anwendung nah an der oberen Grenze des empfohlenen Betriebstemperaturbereichs eingesetzt. Dementsprechend soll die Temperatur des Heizelements selbst überwacht werden, um eine Beschädigung zu vermeiden.

Bekannte Temperaturmesstechniken sind zum Beispiel Wärmebild-Kameras, die auf das Heizelement zu richten sind, oder Thermoelemente, die nah am Heizelement angeordnet werden. Es hat sich allerdings gezeigt, dass Wärmebild-Kameras nicht dazu geeignet sind, ein zuverlässiges Messergebnis für zu messenden Temperaturen zu liefern, die nah an oder über 1.000 °C betragen. Beim Einsatz von Thermoelementen, deren Messstelle in der Nähe, auch unmittelbarer Nähe des heißen Heizdrahtes angeordnet sind, wurde festgestellt, dass aufgrund des stark durchströmenden, zu erwärmenden Fluids lediglich die Fluidtemperatur erfasst wird, und nicht Temperatur des Heizelementes selbst. In diesem Zusammenhang wird auf CN114076535 A verwiesen.

Auch für anderweitige Anwendungen, bei denen ein Heizelement bei einer Temperatur nah an einer Temperaturobergrenze des entsprechenden empfohlenen Betriebstemperaturbereichs betrieben wird, und bei denen die unmittelbare Umgebung des Heizelements eine ähnliche Temperatur aufweist, wie das Heizelement selbst, stellen sich die gleichen Probleme zur Überwachung der Materialstabilität des Heizelements.

Daher liegt der vorliegenden Erfindung die Aufgabe zu Grunde, die Temperatur eines bei hohen Temperaturen und in einem durchströmenden Fluid betriebenen Heizelementes zu messen.

Diese Aufgabe wird mit einem System nach Anspruch 1 dadurch gelöst, dass das mindestens eine Thermoelement mit dem mindestens einen Heizelement elektrisch leitend verbunden ist.

Durch die unmittelbare elektrische Verbindung des Thermoelements mit dem Heizelement kann sichergestellt werden, dass die Temperatur des Heizelementes selbst und nicht zum Beispiel des am Heizelement durchströmenden Fluids erfasst wird.

Das Heizelement ist zum Erwärmen eines durch einen Durchgangskanal durchströmenden Fluids ausgebildet. Hierzu ist das Heizelement zum Beispiel als zumindest drahtförmiges Element mit einer Mehrzahl an Windungen ausgebildet, so dass das Heizelement eine relativ große freie Außenfläche für einen Kontakt mit dem zu erwärmenden Fluid bietet. Außerdem ist das Heizelement vorzugsweise in dem durch das zu erwärmende Fluid durchströmten Durchgangskanal angeordnet. Das zu erwärmende Fluid kann als Gas oder Flüssigkeit ausgebildet sein, vorzugsweise als Umgebungsluft.

Es ist vorgesehen, dass das Thermoelement mit dem Heizelement elektrisch leitend verbunden ist. Hierzu kann das Thermoelement mit dem Heizelement, zum Beispiel mit einer Windung des Heizelements in Kontakt gehalten werden. Vorzugsweise ist das Thermoelement mit dem Heizelement galvanisch verbunden.

Bei einer ersten Ausführungsform des Systems ist das Thermoelement mit dem Heizelement an einer Messstelle stoffschlüssig verbunden.

Hierzu kann das Thermoelement zum Beispiel mit dem Heizelement verschweißt sein. Dadurch wird ein Zusammenhalt des Thermoelements und des Heizelements gewährleistet. Dies ist zum Beispiel zum Erfassen der Temperatur eines Heizelements vorteilhaft, das in dem Durchgangskanal an einer schwererreichbaren Position angeordnet ist. Außerdem kann dadurch ein elektrischer Kontakt zwischen Heizelement und Thermoelement sichergestellt werden.

Bei einer weiteren Ausführungsform des Systems ist das Thermoelement mit dem Heizelement an einer Messstelle kraftschlüssig und/oder formschlüssig verbunden ist.

Hierzu kann das Thermoelement am Heizelement festgeklemmt sein, dieses umwickeln, mithilfe eines Verbindungelements verbunden oder Ähnliches sein, um ein Zusammenhalt des Thermoelements mit dem Heizelement zu gewährleisten. Alternativ oder zusätzlich können das Thermoelement und das Heizelement lösbar miteinander verbunden sein, was Instandhaltungen und zum Beispiel eine Änderung der Position der Messstelle am Heizelement zulässt.

Bei einer weiteren Ausführungsform des Systems weist das Heizelement einen Heizdraht mit NiCr 80/20 auf.

Für Betriebstemperaturen gleich oder über 1.000 °C hinaus sind Heizelemente mit einer anderen Zusammensetzung als NiCr bekannt. Allerdings sind diese in der Regel relativ porös und eignen sich nur schwer zum Heizen von einem am Heizelement durchströmenden Fluid. Es hat sich herausgestellt, dass sich Heizelemente mit einer Zusammensetzung NiCr 80/20 besonders gut zum Erwärmen von durchströmender Luft eignen, auch wenn diese eine für einen bestimmungsgemäßen Betrieb empfohlene Temperaturspanne aufweisen, deren Obergrenze nah an Temperaturen um 1.200 °C liegt. Der Einsatz von derartigen Heizelementen macht es umso wichtiger, deren tatsächliche Temperatur zu überwachen, insbesondere um die Materialstabilität bei einem Betrieb bei Temperaturen um 1.000 °C bzw. 1.200 °C oder höher zu gewährleisten.

Vorzugsweise ist das Heizelement als gewendelter Draht aus NiCr 80/20 ausgebildet. Dadurch kann die Kontaktoberfläche des Heizdrahtes mit einem am Heizelement durchströmenden Fluid, insbesondere Luft, erhöht und somit auch die Wärmeübertragungseffizienz erhöht werden.

Alternativ oder zusätzlich kann das Heizelement ein Material aufweisen, das ein Element oder eine Kombination mehrerer Elemente aus der Liste aufweist: Fe, Cr, AL, Ni, Cr, Cu. Vorzugsweise weist das Heizelement eine Legierung aus der Liste auf: FeCrAl, NiCr, NiFe oder CuNi. Auf dieses Weise kann das Heizelement für eine gezielte Anwendung angepasst werden, insbesondere in Abhängigkeit von der hierfür erzielten Temperatur und der Porosität des Materials, die je nach anwendung von Vorteil oder eben von Nachteil sein kann. Mit einer FeCrAl-Legierung kann das entsprechende Heizelement bei Temperauren bis zu 1.425 °C betrieben werden. Mit einer FeCrAl-Legierung kann das entsprechende Heizelement bei Temperauren bis zu 1.425 °C betrieben werden. Mit einer NiCr -Legierung kann das entsprechende Heizelement bei Temperauren bis zu 1.250 °C betrieben werden. Mit einer NiFe 1-Legierung kann das entsprechende Heizelement bei Temperauren bis zu 600 °C betrieben werden. Mit einer CuNi l-Legierung kann das entsprechende Heizelement bei Temperauren bis zu 600 °C betrieben werden.

Bei einer weiteren Ausführungsform des Systems ist das Thermoelement ein Mantelthermoelement.

Mantelthermoelemente sind im herkömmlichen Handel einfach zu bekommen. In dieser Ausführungsform kann das System einfach und kostengünstig verwirklicht werden.

Bei einer weiteren Ausführungsform des Systems ist das Thermoelement mit einem Messumformer über eine elektrische Leitung verbunden. Außerdem ist der Messumformer möglichst nah an der Messstelle angeordnet und die elektrische Leitung ist gegenüber ihrer Umgebung elektrisch isoliert.

Durch die unmittelbare elektrische Verbindung zwischen dem Thermoelement und dem Heizelement steht das Thermoelement unter vergleichsweise hoher Spannung und ist mit einem Messumformer verbunden. Der Messumformer liefert ein Ausgangssignal, das eine Spannung mit einem niedrigeren Betrag aufweist. Dieses Ausgangssignal kann dann an eine Auswertungseinrichtung übertragen werden, über eine Kabelverbindung oder über eine kabellose Verbindung.

Die Nähe zwischen dem Messumformer und der Messstelle bzw. der Position, an der das Thermoelement mit dem Heizelement elektrisch verbunden ist, zusammen mit der elektrischen Isolierung der Verbindung zwischen dem Thermoelement und dem Messumformer ermöglicht, die Gefahren der hohen Spannungen am Thermoelement zu sinken.

Eine Isolierung der Leitung zwischen Thermoelement und Messumformer kann zum Beispiel durch Führen der Leitung in einer Wandung des Durchgangskanals, die zumindest teilweise aus einem Isolierungsmaterial ausgebildet ist, wie zum Beispiel Keramik, verwirklicht werden. Vorzugsweise ist das Isolierungsmaterial sowohl elektrisch isolierend, als auch thermisch isolierend. Dadurch können einerseits die Gefahren, die mit elektrischen Signale hoher Spannungen hergehen, vermieden werden. Andererseits kann dadurch die Wärme möglichst effizient von dem mindestens einen Heizelement an die Luft übertragen werden, wobei Verluste durch anderweitige Wärmeaufnahme, zum Beispiel durch die Wände des Durchgangskanals, soweit verringert werden.

Erfindungsgemäß ist das Heizelement in einem Durchgangskanal angeordnet, das zu erwärmende Fluid strömt in dem Durchgangskanal durch und das Heizelement und der Durchgangskanal bilden Elemente einer Energiespeicherungsanlage und/oder einer Energierückgewinnungsanlage.

Eine Energiespeicherungsanlage kann beispielsweise mehrere, in dem Durchgangskanal angeordnete Heizelemente, die jeweils elektrisch gespeist sind, und eine an dem Durchgangskanal angeschlossene Wärmespeichervorrichtung aufweisen. Dabei weist die Wärmespeichervorrichtung vorzugsweise ein Speichermaterial auf, das zur Speicherung von Wärme vorgesehen ist.

Über die Länge des Durchgangskanals entsteht ein Temperaturgradient. An der Position in dem Durchgangskanal, an der die Temperatur am höchsten ist, kann die Temperatur des durchströmenden und erwärmten Fluids relativ nah an der Temperatur des nächsten oder an dieses Position angeordneten Heizelements sein. Insbesondere für derartige Heizelemente ist es vorteilhaft, eine elektrische Verbindung zwischen Thermoelement und Heizelement vorzusehen, um die tatsächliche Temperatur des Heizelements selbst zu erfassen.

Eine Energiespeicherungsanlage kann auch als Energierückgewinnungsanlage fungieren, indem sich die Anlage dazu eignet, die zum Beispiel unter der Form von Wärme gespeicherte Energie wieder in elektrische Energie umzuwandeln.

Als Durchgangskanal wird insbesondere ein länglicher Raum verstanden, der in einem massiven Isolierungsmaterial ausgebildet ist, oder der durch Zusammenstellen mehrerer Bauteile aus einem Isolierungsmaterial ausgebildet ist. Ein Beispiel für ein solches Isolierungsmaterial ist Keramik.

Alternativ kann der Durchgangskanal in einem Wärmespeichermaterial ausgebildet sein, wobei sich das Wärmespeichermaterial zur Speicherung von Energie, beispielsweise von Wärme eignet. Dadurch kann die Wärme direkt in die Wandung des Durchgangskanals gespeichert und so die gesamte Anlage kompakt ausgebildet werden.

Erfindungsgemäß sind mehrere, über die Länge des Durchgangskanals verteilte und in dem Durchgangskanal angeordnete Heizelemente vorgesehen und eine Umwälzeinrichtung ist zum Umwälzen des zu erwärmenden Fluids vorgesehen. Dadurch kann das Fluid in dem Durchgangskanal beschleunigt und durch mehrere Heizelemente erwärmt werden.

Die oben genannte Aufgabe ist auch mit einer Verwendung eines Thermoelements zur Überwachung der Temperatur eines Heizelements nach Anspruch 7 dadurch gelöst, dass das Thermoelement mit dem Heizelement elektrisch leitend verbunden ist.

Somit können herkömmliche Thermoelemente und Heizelemente eingesetzt werden, um die Temperatur des Heizelementes zu erfassen, insbesondere unter den besonderen Bedingungen von relativ hohen Betriebstemperaturen des Heizelements und im Kontext eines am Heizelement durchströmenden Fluids.

Das Heizelement wird bei einer Temperatur betrieben, die am Grenzbereich dessen bestimmungsgemäßen Temperaturbetriebsbereichs liegt. Hierbei kann für das Thermoelement ein Temperaturbereich an dessen Messstelle empfohlen werden, der beispielsweise eine Obertemperaturgrenze von ca. 1.250 °C aufweist, und das Thermoelement bei einer Solltemperatur von ca. 1.200 °C betrieben werden, um das Fluid im Durchgangskanal zu erwärmen.

Bei einer Ausführungsform der Verwendung wird das Heizelement mit einer Betriebstemperatur gleich oder höher als 1.000 °C, vorzugsweise gleich oder höher als 1.200 °C betrieben.

Somit kann das durchströmende Fluid durch Konvektion bzw. Wärmestrahlung beim Vorbeiströmen am Heizelement erwärmt werden und anschließend eine für die Anwendung angemessene Wärmemenge an eine im Durchfluss hinter dem Durchgangskanal angeordnete Wärmespeichervorrichtung übertragen.

Bei einer weiteren Ausführungsform der Verwendung ist das Thermoelement mit dem Heizelement an einer Messstelle stoffschlüssig, formschlüssig und/oder kraftschlüssig verbunden. Dadurch lässt sich zumindest vorübergehend, insbesondere dauerhaft bei einer Schweißverbindung eine elektrische Verbindung zwischen Thermoelement und Heizelement sicherstellen.

Bei einer weiteren Ausführungsform ist das Thermoelement mit einem Messumformer über eine elektrische Leitung verbunden, wobei der Messumformer möglichst nah an der Messstelle angeordnet ist, und wobei die elektrische Leitung gegenüber ihrer Umgebung elektrisch isoliert ist. Somit wird die Gefahr eines unerwünschten und ggf. gefährlichen elektrischen Kontakts zwischen der Leitung unter hohen Spannung und weiteren Elemente verringern.

Die oben beschriebenen Ausführungsformen des Systems und der Verwendung sind einzeln oder zusammen beliebig miteinander kombinierbar. Weitere Merkmale und Vorteile des Systems und der Verwendung können der nachfolgenden Beschreibung von Ausführungsbeispielen entnommen werden, wobei auf die beigefügte Zeichnung Bezug genommen wird.

In der Zeichnung zeigen
- Fig. 1: eine erste Vorrichtung zur Erwärmung eines Fluids,
- Fig. 2: eine weitere Vorrichtung zur Erwärmung eines Fluids,
- Fig. 3: ein System mit einem Heizelement und mit einem Thermoelement,
- Fig. 4: eine Detailansicht des Systems aus der Fig. 3 in einer ersten Ausführungsform und
- Fig. 5: eine Detailansicht des Systems aus der Fig. 3 in einer weiteren Ausführungsform.

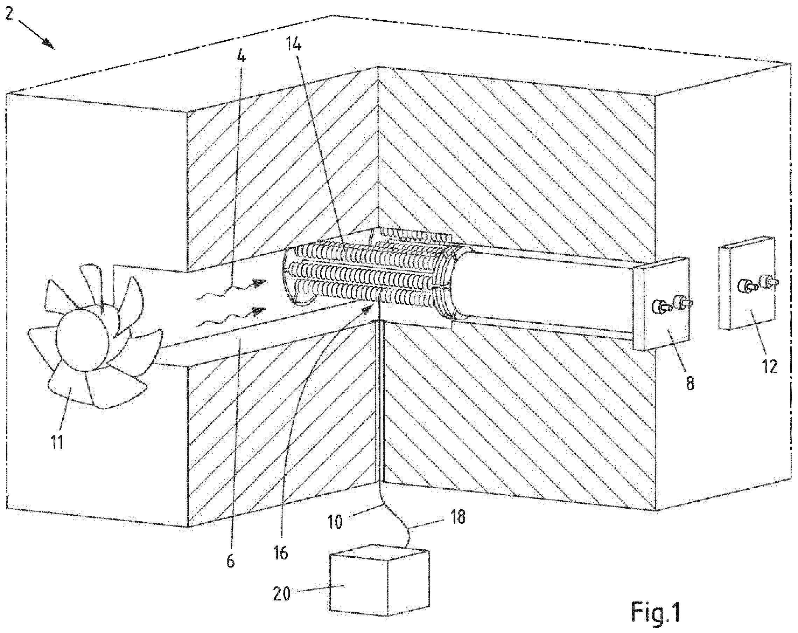

Fig. 1 zeigt eine Vorrichtung 2 zur Erwärmung eines Fluids 4, mit einem durch ein zu erwärmendes Fluid 4 durchströmten Durchgangskanal 6, mit einem Heizelement 8 und mit einem Thermoelement 10. In dem konkreten Fall der Fig. 1 ist das zu erwärmende Fluid 4 Luft, die durch den Durchgangskanal 6 mittels einer Umwälzeinrichtung 11 beschleunigt wird. Weiterhin sind mehrere Heizelemente 8, 12 vorgesehen, die in dem Durchgangskanal 6 angeordnet und derart ausgebildet sind, dass das Fluid 4 beim Durchströmen mit diesen in Kontakt tritt und so erwärmt wird.

Der Durchgangskanal 6 ist in einem Isolierungsmaterial ausgebildet, das elektrisch und thermisch isolierend ist, wie hier Keramik mit einer relativen hohen Porosität. Die in dem Durchgangskanal 6 durchströmende Luft 4 wird durch die Heizelemente 8, 12 erwärmt.

Bei einem Erwärmungsvorgang wird das Heizelement 8 bei Temperaturen betrieben, die am Grenzbereich dessen bestimmungsgemäßen Temperaturbetriebsbereichs liegen. So weist das dargestellte Heizelement 8 einen gewedelten Heizdraht 14 aus NiCr 80/20 auf, dessen empfohlener Betriebstemperaturbereich eine Obergrenze bei ca. 1.250 °C aufweist.

Um die eigene Temperatur des Heizelements 8 zu erfassen, ist das Thermoelement 10 mit dem Heizelement 8 elektrisch leitend verbunden. Hier ist das Thermoelement 10 ein kabelförmiges Mantelelement mit einer Messstelle 16, an der es mit dem Heizdraht 14 des Heizelements 8 elektrisch leitend verbunden ist. Das Thermoelement 10 dient als Leitung 18 zwischen der Messstelle 16 und einem außerhalb des Durchgangskanals 6 vorgesehenen Messumformer 20 und ist für die Zwecke der Isolierung durch das Isolierungsmaterial geführt.

Bei einem Erwärmungsvorgang und für eine zweckmäßige Erwärmung wird am Heizdraht 14 des Heizelementes 8 eine verhältnismäßig hohe elektrische Spannung, beispielsweise um die 400 V, angelegt. Der Messumformer 20 wandelt das elektrische Signal, das er durch die Verbindung mit dem Thermoelement 10 als Eingangssignal entgegennimmt, in ein elektrisches Ausgangssignal mit einer niedrigeren Spannung, die zum Beispiel bei etwa 12 V liegt, um.

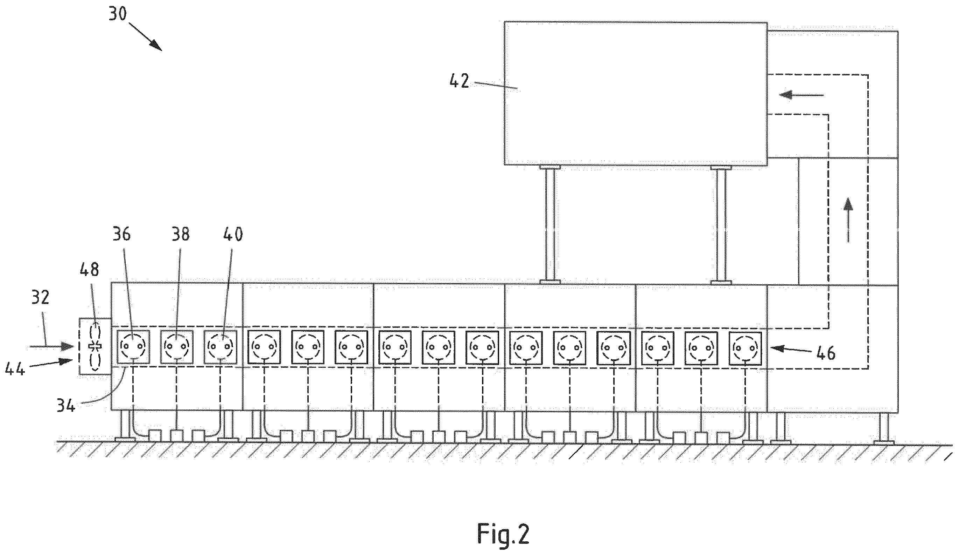

Fig. 2 zeigt eine weitere Vorrichtung 30 zur Erwärmung eines Fluids 32 mit einem Durchgangskanal 34, mit mehreren Heizelementen 36, 38, 40 und mit einer Wärmespeichervorrichtung 42. Der Durchgangskanal 34 weist einen Einlass 44 und einen Auslass 46 auf, wodurch das zu erwärmende Fluid 32 jeweils in den Durchgangskanal 34 eingelassen und aus dem Durchgangskanal 34 ausgelassen wird. Eine Umwälzeinrichtung 48 ist am Einlass 44 des Durchgangskanals 34 angeordnet und dazu eingerichtet, Luft 32 in Richtung des Durchgangskanals 34 zu beschleunigen.

Die Wärmespeichervorrichtung 42 ist am Auslass 46 des Durchgangskanals 34 angeordnet und mit dem Durchgangskanal 34 strömungsdicht verbunden. Die Wärmespeichervorrichtung 42 weist außerdem ein Wärmespeichermaterial auf. Im Betrieb wird die Luft 32 in den Durchgangskanal 34 eingeleitet und beim Durchströmen durch den Durchgangskanal 34 durch die Heizelemente 36, 38, 40 erwärmt. Im Anschluss wird die Luft 32 aus dem Durchgangskanal 34 in die Wärmespeichervorrichtung 42 eingeleitet. In der Wärmespeichervorrichtung 42 gibt die erwärmet Luft 32 dann Wärme an das Wärmespeichermaterial ab, die dann hierein gespeichert und für eine spätere Energierückgewinnung gespeichert wird.

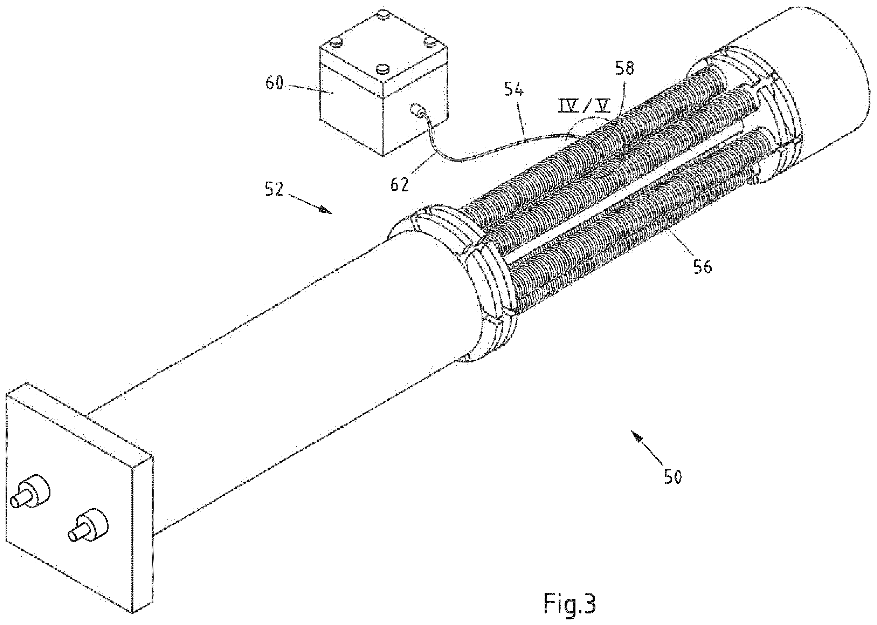

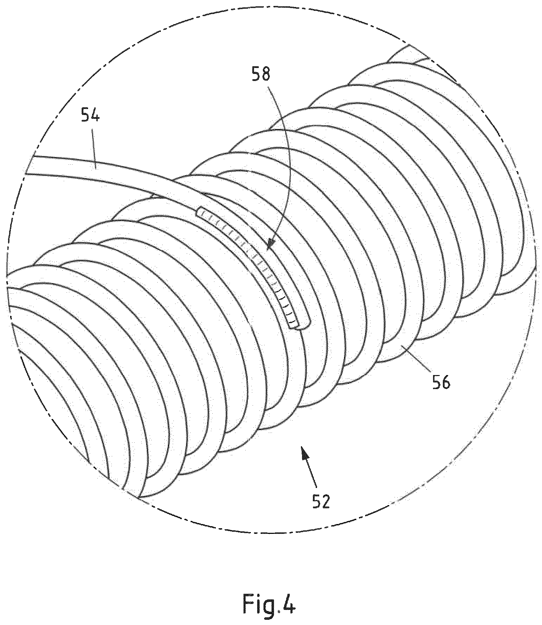

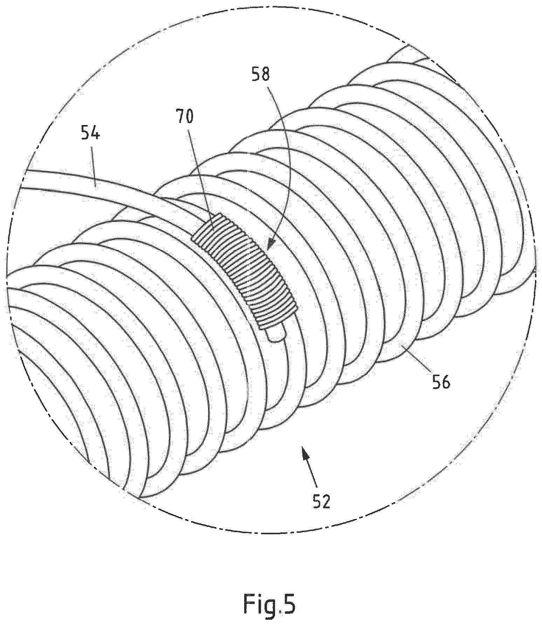

Fig. 3 zeigt ein System 50 mit einem Heizelement 52 und mit einem Thermoelement 54, diesmal losgelöst von einem Anwendungskontext. Das Heizelement 52 weist einen Heizdraht 56 auf, dessen Betriebstemperatur überwacht werden soll. Das Thermoelement 54 weist auch hier eine Messstelle 58 auf, die mit dem Heizdraht 56 elektrisch leitend verbunden ist. Genauere Details über diese Verbindung werden später in Zusammenhang mit den Fig. 4 und 5 erläutert.

In der dargestellten Konstellation ist der vorgesehene Messumformer 60 möglichst nah an der Messstelle 58 angeordnet und die elektrische Leitung 62 zwischen Messumformer 60 und Messstelle 58 bzw. Thermoelement 54 ist gegenüber ihrer Umgebung elektrisch isoliert.

Fig. 4 zeigt eine Detailansicht des Systems 50 aus der Fig. 3 in einer ersten Ausführungsform, bei der das Thermoelement 54 mit dem Heizelement 52 an einer Messstelle 58 stoffschlüssig verbunden ist. Insbesondere ist das Thermoelement 54 an seiner Messstelle 58 mit dem Heizdraht 56 des Heizelements 52 verschweißt.

Fig. 5 zeigt eine Detailansicht des Systems 50 aus der Fig. 3 in einer zur Ausführungsform der Fig. 4 alternativen Ausführungsform. Hier ist die Messstelle 58 des Thermoelements 54 mit dem Heizdraht 56 des Heizelements 52 mechanisch verbunden, in dem ein Verbindungselement 70 in Form eines Wickeldrahtes um die Messstelle 58 und den Heizdraht 56 zugleich gewickelt ist.

## Patentansprüche

1. System (30)
- mit einem Durchgangskanal (6, 34),
- mit mindestens einem Heizelement (8, 12, 36, 38, 40, 52) und
- mit mindestens einem Thermoelement (10, 54),
- wobei das mindestens eine Heizelement (8, 12, 36, 38, 40, 52) zum Erwärmen eines am mindestens einen Heizelement (8, 12, 36, 38, 40, 52) durchströmenden Fluids (4, 32) ausgebildet ist,
- wobei das Heizelement (8, 12, 36, 38, 40, 52) in dem Durchgangskanal (6, 34) angeordnet ist,
- wobei das zu erwärmende Fluid (4, 32) in dem Durchgangskanal (6, 34) durchströmt,
- wobei das Heizelement (8, 12, 36, 38, 40, 52) und der Durchgangskanal (6, 34) Elemente einer Energiespeicherungsanlage und/oder einer Energierückgewinnungsanlage bilden,
- wobei mehrere, über die Länge des Durchgangskanals (6, 34) verteilte und in dem Durchgangskanal (6, 34) angeordnete Heizelemente (8, 12, 36, 38, 40, 52) vorgesehen sind, und
- wobei eine Umwälzeinrichtung (11, 48) zum Umwälzen des zu erwärmenden Fluids (4, 32) vorgesehen ist,
**dadurch gekennzeichnet,**
**dass** das mindestens eine Thermoelement (10, 54) mit dem mindestens einen Heizelement (8, 12, 36, 38, 40, 52) elektrisch leitend verbunden ist.

2. System (30) nach Anspruch 1,
**dadurch gekennzeichnet,**
**dass** das Thermoelement (10, 54) mit dem Heizelement (8, 12, 36, 38, 40, 52) an einer Messstelle (16, 58) stoffschlüssig verbunden ist.

3. System (30) nach Anspruch 1,
**dadurch gekennzeichnet,**
**dass** das Thermoelement (10, 54) mit dem Heizelement (8, 12, 36, 38, 40, 52) an einer Messstelle (16, 58) kraftschlüssig und/oder formschlüssig verbunden ist.

4. System (30) nach einem der Ansprüche 1 bis 3,
**dadurch gekennzeichnet,**
**dass** das Heizelement (8, 12, 36, 38, 40, 52) einen Heizdraht (14, 56) mit NiCr 80/20 aufweist.

5. System (30) nach einem der Ansprüche 1 bis 4,
**dadurch gekennzeichnet,**
**dass** das Thermoelement (10, 54) ein Mantelthermoelement ist.

6. System (30) nach einem der Ansprüche 1 bis 5,
**dadurch gekennzeichnet,**
**dass** das Thermoelement (10, 54) mit einem Messumformer (20, 60) über eine elektrische Leitung (18, 42) verbunden ist,
wobei der Messumformer (20, 60) möglichst nah an der Messstelle (16, 58) angeordnet ist, und
wobei die elektrische Leitung (18, 62) gegenüber ihrer Umgebung elektrisch isoliert ist.

7. Verwendung eines Thermoelements (10, 54) zur Überwachung der Temperatur eines Heizelements (8, 12, 36, 38, 40, 52),
wobei das Heizelement (8, 12, 36, 38, 40, 52) in einem durch ein Fluid (4, 32) durchströmten Durchgangskanal (6, 34) zur Erwärmung des Fluids (4, 32) angeordnet ist,
wobei das Heizelement (8, 12, 36, 38, 40, 52) bei einer Temperatur betrieben wird, die am Grenzbereich dessen bestimmungsgemäßen Temperaturbetriebsbereichs liegt,
wobei das Heizelement (8, 12, 36, 38, 40, 52) und der Durchgangskanal (6, 34) Elemente einer Energiespeicherungsanlage und/oder einer Energierückgewinnungsanlage bilden,
wobei mehrere, über die Länge des Durchgangskanals (6, 34) verteilte und in dem Durchgangskanal (6, 34) angeordnete Heizelemente (8, 12, 36, 38, 40, 52) vorgesehen sind, und
wobei eine Umwälzeinrichtung (11, 48) zum Umwälzen des zu erwärmenden Fluids (4, 32) vorgesehen ist,
**dadurch gekennzeichnet,**
**dass** das Thermoelement (10, 54) mit dem Heizelement (8, 12, 36, 38, 40, 52) elektrisch leitend verbunden ist.

8. Verwendung nach Anspruch 7,
**dadurch gekennzeichnet,**
**dass** das Heizelement (8, 12, 36, 38, 40, 52) mit einer Betriebstemperatur gleich oder höher als 1.000 °C, vorzugsweise gleich oder höher als 1.200 °C betrieben wird.

9. Verwendung nach Anspruch 7 oder 8,
**dadurch gekennzeichnet,**
**dass** das Thermoelement (10, 54) mit dem Heizelement (8, 12, 36, 38, 40, 52) an einer Messstelle (16, 58) stoffschlüssig, kraftschlüssig und/oder formschlüssig verbunden ist.

10. Verwendung nach einem der Ansprüche 7 bis 9,
**dadurch gekennzeichnet,**
**dass** das Thermoelement (10, 54) mit einem Messumformer (20, 60) über eine elektrische Leitung (18, 62) verbunden ist,
wobei der Messumformer (20, 60) möglichst nah an der Messstelle (16, 58) angeordnet ist, und
wobei die elektrische Leitung (18, 62) gegenüber ihrer Umgebung elektrisch isoliert ist.

## Claims

1. System (30)
- comprising a flow channel (6, 34),
- comprising at least one heating element (8, 12, 36, 38, 40, 52) and
- with at least one thermocouple (10, 54),
- wherein the at least one heating element (8, 12, 36, 38, 40, 52) is configured to heat a fluid (4, 32) flowing through the at least one heating element (8, 12, 36, 38, 40, 52),
- wherein the heating element (8, 12, 36, 38, 40, 52) is arranged in the flow channel (6, 34),
- wherein the fluid (4, 32) to be heated flows through the flow channel (6, 34),
- wherein the heating element (8, 12, 36, 38, 40, 52) and the flow channel (6, 34) form elements of an energy storage system and/or an energy recovery system,
- wherein a plurality of heating elements (8, 12, 36, 38, 40, 52) are provided, distributed along the length of the flow channel (6, 34) and arranged within the flow channel (6, 34), and
- wherein a circulation device (11, 48) is provided for circulating the fluid (4, 32) to be heated,
**characterised in that**
the at least one thermocouple (10, 54) is electrically conductively connected to the at least one heating element (8, 12, 36, 38, 40, 52).

2. System (30) according to claim 1,
**characterised in that**
the thermocouple (10, 54) is connected to the heating element (8, 12, 36, 38, 40, 52) at a measuring point (16, 58) by material bonding.

3. System (30) according to claim 1,
**characterised in that**
the thermocouple (10, 54) is connected to the heating element (8, 12, 36, 38, 40, 52) at a measuring point (16, 58) by a force-fit and/or form-fit connection.

4. A system (30) according to any one of claims 1 to 3,
**characterised in that**
the heating element (8, 12, 36, 38, 40, 52) comprises a heating wire (14, 56) made of NiCr 80/20.

5. System (30) according to any one of claims 1 to 4,
**characterised in that**
the thermocouple (10, 54) is a sheathed thermocouple.

6. System (30) according to any one of claims 1 to 5,
**characterised in that**
the thermocouple (10, 54) is connected to a transducer (20, 60) via an electrical electrical conductor (18, 42),
wherein the transducer (20, 60) is arranged as close as possible to the measuring point (16, 58), and
wherein the electrical cable (18, 62) is electrically insulated from its surroundings.

7. Use of a thermocouple (10, 54) for monitoring the temperature of a heating element (8, 12, 36, 38, 40, 52),
wherein the heating element (8, 12, 36, 38, 40, 52) is arranged in a flow channel (6, 34) through which a fluid (4, 32) flows, for heating the fluid (4, 32),
wherein the heating element (8, 12, 36, 38, 40, 52) is operated at a temperature situated at the boundary of its intended operating temperature range,
wherein the heating element (8, 12, 36, 38, 40, 52) and the flow channel (6, 34) form elements of an energy storage system and/or an energy recovery system,
wherein a plurality of heating elements (8, 12, 36, 38, 40, 52) distributed along the length of the flow channel (6, 34) and arranged within the flow channel (6, 34) are provided, and
wherein a circulation device (11, 48) is provided for circulating the fluid (4, 32) to be heated,
**characterised in that**
the thermocouple (10, 54) is electrically conductively connected to the heating element (8, 12, 36, 38, 40, 52).

8. Use according to claim 7,
**characterised in that**
the heating element (8, 12, 36, 38, 40, 52) is operated at an operating temperature of 1,000 °C or higher, preferably 1,200 °C or higher.

9. Use according to claim 7 or 8,
**characterised in that**
the thermocouple (10, 54) is connected to the heating element (8, 12, 36, 38, 40, 52) at a measuring point (16, 58) by material bonding, force-fit and/or form-fit.

10. Use according to any one of claims 7 to 9,
**characterised in that**
the thermocouple (10, 54) is connected to a transducer (20, 60) via an electrical conductor (18, 62),
wherein the transducer (20, 60) is arranged as close as possible to the measuring point (16, 58), and
whereby the electrical conductor (18, 62) is electrically insulated from its surroundings.

## Revendications

1. Système (30)
- comprenant un canal de passage (6, 34),
- comportant au moins un élément chauffant (8, 12, 36, 38, 40, 52) et
- avec au moins un thermocouple (10, 54),
- l'au moins un élément chauffant (8, 12, 36, 38, 40, 52) étant conçu pour chauffer un fluide (4, 32) circulant à travers l'au moins un élément chauffant (8, 12, 36, 38, 40, 52),
- l'élément chauffant (8, 12, 36, 38, 40, 52) étant disposé dans le canal de passage (6, 34),
- le fluide à chauffer (4, 32) s'écoulant dans le canal de passage (6, 34),
- l'élément chauffant (8, 12, 36, 38, 40, 52) et le canal de passage (6, 34) formant des éléments d'une installation de stockage d'énergie et/ou d'une installation de récupération d'énergie,
- dans lequel plusieurs éléments chauffants (8, 12, 36, 38, 40, 52), répartis sur la longueur du canal de passage (6, 34) et disposés dans le canal de passage (6, 34), sont prévus, et
- en ce qu'un dispositif de circulation (11, 48) est prévu pour faire circuler le fluide à chauffer (4, 32),
**caractérisé en**
**ce que** ledit au moins un thermocouple (10, 54) est relié de manière électriquement conductrice audit au moins un élément chauffant (8, 12, 36, 38, 40, 52).

2. Système (30) selon la revendication 1,
**caractérisé en**
**ce que** le thermocouple (10, 54) est relié par adhérence de matière à l'élément chauffant (8, 12, 36, 38, 40, 52) au niveau d'un point de mesure (16, 58).

3. Système (30) selon la revendication 1,
**caractérisé en**
**ce que** le thermocouple (10, 54) est relié à l'élément chauffant (8, 12, 36, 38, 40, 52) en un point de mesure (16, 58) par friction et/ou par complémentarité de forme.

4. Système (30) selon l'une des revendications 1 à 3,
**caractérisé en**
**ce que** l'élément chauffant (8, 12, 36, 38, 40, 52) comporte un fil chauffant (14, 56) en NiCr 80/20.

5. Système (30) selon l'une des revendications 1 à 4,
**caractérisé en**
**ce que** le thermocouple (10, 54) est un thermocouple à gaine.

6. Système (30) selon l'une des revendications 1 à 5,
**caractérisé en**
**ce que** le thermocouple (10, 54) est relié à un transducteur (20, 60) par l'intermédiaire d'un câble électrique (18, 42),
le transducteur (20, 60) étant disposé aussi près que possible du point de mesure (16, 58), et
et le câble électrique (18, 62) étant isolé électriquement de son environnement.

7. Utilisation d'un thermocouple (10, 54) pour surveiller la température d'un élément chauffant (8, 12, 36, 38, 40, 52),
l'élément chauffant (8, 12, 36, 38, 40, 52) étant disposé dans un canal de passage (6, 34) traversé par un fluide (4, 32) afin de chauffer ledit fluide (4, 32),
l'élément chauffant (8, 12, 36, 38, 40, 52) fonctionnant à une température située à la limite de sa plage de température de fonctionnement normale,
l'élément chauffant (8, 12, 36, 38, 40, 52) et le canal de passage (6, 34) constituant des éléments d'une installation de stockage d'énergie et/ou d'une installation de récupération d'énergie,
plusieurs éléments chauffants (8, 12, 36, 38, 40, 52) étant prévus, répartis sur la longueur du canal de passage (6, 34) et disposés dans celui-ci, et
un dispositif de circulation (11, 48) étant prévu pour faire circuler le fluide à chauffer (4, 32),
**caractérisé en**
**ce que** le thermocouple (10, 54) est relié de manière électriquement conductrice à l'élément chauffant (8, 12, 36, 38, 40, 52).

8. Utilisation selon la revendication 7,
**caractérisée en**
**ce que** l'élément chauffant (8, 12, 36, 38, 40, 52) fonctionne à une température de service égale ou supérieure à 1 000 °C, de préférence égale ou supérieure à 1 200 °C.

9. Utilisation selon la revendication 7 ou 8,
**caractérisée en**
**ce que** le thermocouple (10, 54) est relié à l'élément chauffant (8, 12, 36, 38, 40, 52) en un point de mesure (16, 58) par adhérence de matière, par friction et/ou par complémentarité de forme.

10. Utilisation selon l'une des revendications 7 à 9,
**caractérisée en**
**ce que** le thermocouple (10, 54) est relié à un transducteur (20, 60) par l'intermédiaire d'un câble électrique (18, 62),
le transducteur (20, 60) étant disposé aussi près que possible du point de mesure (16, 58), et
le câble électrique (18, 62) étant isolé électriquement de son environnement.
